# EUROPEAN PATENT SPECIFICATION

(11) **EP 0 745 357 B1**
(45) Date of publication and mention of the grant of the patent: **02.01.2003**
(21) Application number: 96108509.9
(22) Date of filing: 29.05.1996
(51) Int. Cl.: A61C 1/05

(54) **Dental handpiece with central injection of cooling fluid**
Dentales Handstück mit zentraler Injektion von Kühlflüssigkeit
Pièce à main dentaire avec injection centrale de fluide de refroidissement

(30) Priority: 31.05.1995 JP 13314295
(43) Date of publication of application: 04.12.1996
(73) Proprietor: Nakanishi Inc., Kanuma-shi, Tochigi-ken (JP)
(72) Inventor: Nakanishi, Takasuke, Kanuma-shi, Tochigi-ken (JP)
(74) Representative: Herrmann-Trentepohl, Werner, Dipl.-Ing.

(56) References cited:
- EP-A- 0 610 113
- DE-B- 1 297 809
- FR-A- 2 635 676
- US-A- 2 442 033

## Description

### BACKGROUND OF THE INVENTION

The present invention relates to a center injection type dental handpiece, and more particularly to a center injection type handpiece capable of injecting water through a cutting bar for use in dental implant operation or the like.

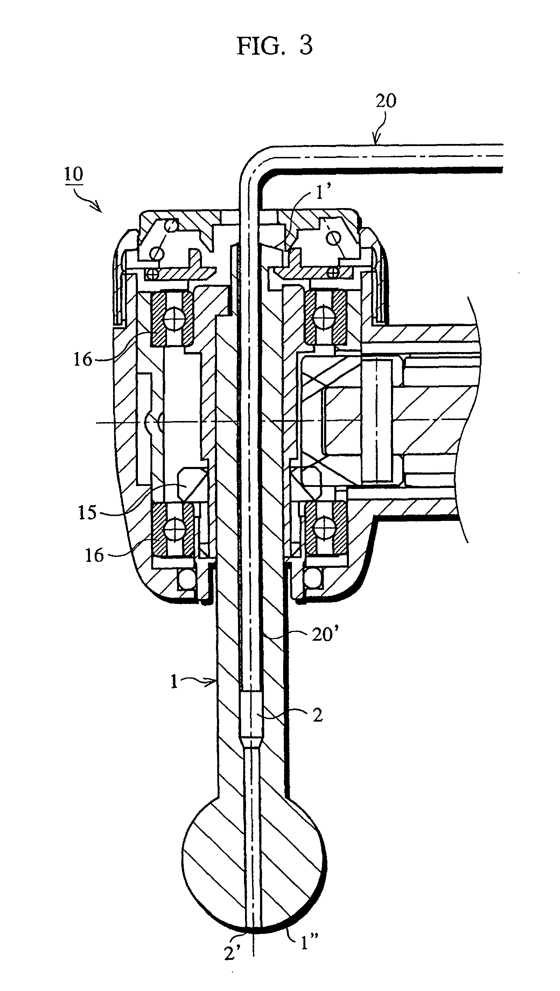

Hitherto, in drilling and tapping in transplant operation of dental implant material, in particular, the center injection type handpiece has been used. In this handpiece, as shown in Fig. 3, a cutting bar 1 such as a drill in which a hollow 2 penetrates in the axial direction of the bar is detachably held by a head 10 and rotated. A water injection nozzle 20 communicating with a cooling water feed source (not shown) is inserted into the hollow 2 from the proximal end 1' of the bar 1, so that cooling water can be injected into the cutting site from an injection port 2' located at the tip 1" of the bar 1.

In such a conventional center injection type handpiece, however, when the injection port 2' of the bar 1 is blocked by the cutting site, the cooling water flows back and leaks out from the proximal end 1' of the bar 1 into the head 10 through a tiny gap between the outer circumference 20' of the injection nozzle 20 in the bar 1 and the inner circumference of the hole 2. When such water leakage is repeated, it may have adverse effects on a bearing 16 and rust may be formed in internal parts such as a gear 15, so that the cutting efficiency of the handpiece is lowered and the durability is spoiled.

From DE 1297809 a dental handpiece is known which comprises a packing for sealing the gap around the injection nozzle to avoid any water leakage in this area.

### SUMMARY OF THE INVENTION

It is hence an object of the present invention to provide a center injection type dental handpiece wherein the leakage of the cooling water from the proximal end of the bar is prevented by means of a seal although the bar is always detachable.

The above and other objects of the invention will become apparent from the following description.

According to the invention, as compared with a conventional center injection type handpiece wherein a cutting bar provided with a hollow penetrating axially therethrough is detachably held and rotated, and water injection nozzle communicating with a cooling water feed source is inserted into the hollow from the proximal end of the bar, so that the cooling water is injected from the tip of the bar, there is provided a center injection type dental handpiece, as means for achieving the above object, containing a packing for sealing a gap between the outer periphery of the nozzle and the inner periphery of the bar at the proximal end of the bar which said packing is detachable from said nozzle and said bar.

### BRIEF DESCRIPTION OF THE DRAWINGS

Fig. 1 is a sectional view showing a head of a center injection type dental handpiece of the present invention;
Fig. 2 is an explanatory view showing the head and a packing with a bar and an injection nozzle being removed; and
Fig. 3 is a sectional view showing a conventional center injection type dental handpiece.

### PREFERRED EMBODIMENT OF THE INVENTION

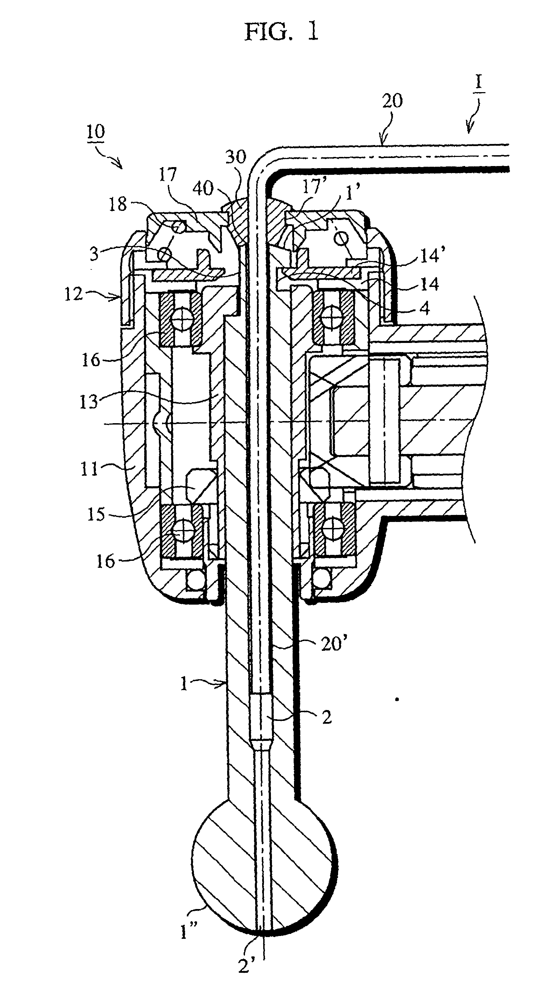

Fig. 1 is a sectional view showing a head 10 of a center injection type dental handpiece I of the invention. Same parts as in Fig. 3 are identified with the same reference numerals.

The handpiece I is a push type contra-angle handpiece wherein a cutting bar 1 (schematically shown) of a latch type provided with a hollow 2 for center water injection penetrating in the axial direction of the bar is detachably held and rotated in the head 10. A notch 3 and a detent groove 4 are provided near the proximal end of the bar 1.

The head 10 contains a bar tube 13 for receiving the bar 1 therein in a head housing 11 to prevent the rotation of the bar 1 in cooperation with the notch 3, a chuck device 14 for holding the bar 1 in place by engagement of a latch plate 14' thrust radially inwardly by a spring (not shown) with the detent groove 4 of the bar 1, a gear 15 fixed on the lower (distal) portion of the outer circumference of the bar tube 13 for transmitting the rotation from a motor (not shown) to the bar tube 13, and upper and lower ball bearings 16 for axially supporting the bar tube 13 and the gear 15.

A head cap 12 screwed onto the head housing 11 is provided with a pushbutton 17 which is thrust upward by a spring 18. By pressing down this button 17, the latch plate 14' is opened, and holding of the bar 1 by the chuck device 14 can be released.

The pushbutton 17 has an opening 17' for inserting an injection nozzle 20 communicating with a cooling water feed source (not shown), and a packing 30 is placed in the opening 17'.

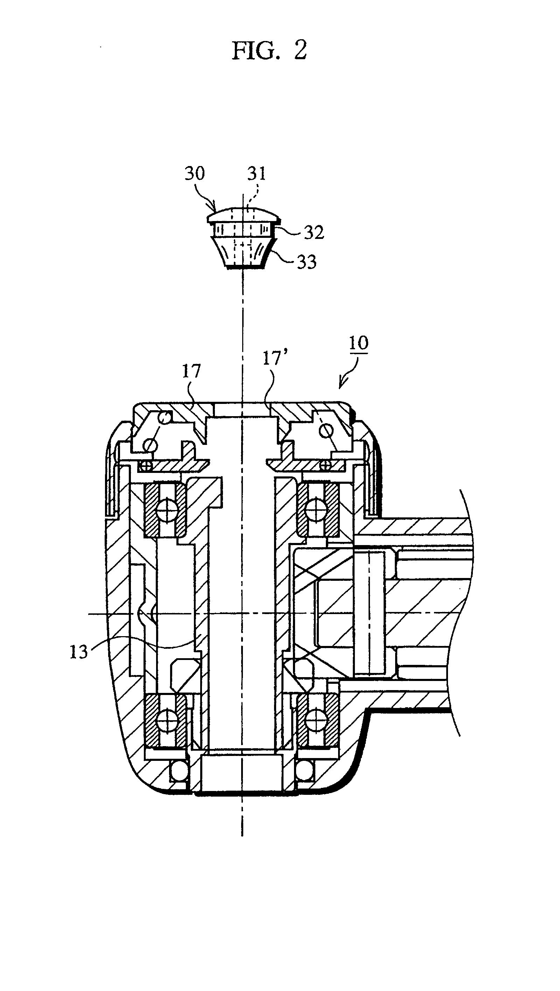

The packing 30 has, as shown in Fig. 2, a hole 31 through which the injection nozzle 20 is inserted, a groove 32 which mates with the edge of the opening 17' of the pushbutton 17, and a protrusion 33 having a downwardly tapered surface. The packing 30 is made of an elastic body so as to be easily attached to and detached from the opening 17'. Practical examples of the elastic body may include, for example, nitrile rubber, silicone rubber, and fluoro rubber.

The injection nozzle 20 is inserted through the hole 31 of the packing 30, and into the hollow 2 of the bar 1.

The protrusion 33 of the packing 30 seals with a slight pressure the gap between the outer periphery 20' of the injection nozzle 20 and the inner periphery of the bar 1 mounted on the head 10 at the proximal end 1' of the bar 1.

Accordingly, even if the injection port 2' at the tip 1" of the bar 1 is blocked by the cutting site, the tiny gap between the outer circumference 20' of the injection nozzle 20 inside the bar 1 and the inner circumference of the hole 2 will not serve as a leakage path for the cooling water because pressure is not released from the proximal end 1' of the bar 1 sealed by the packing 30.

Meanwhile, since the handpiece I is intended for use in tapping by rotating the bar 1 at a low speed, wearing hardly occurs due to friction between the proximal end 1' of the bar 1 and the packing 30.

## Claims

1. A center injection type dental handpiece comprising:
a cutting bar (1) having a hollow (2) axially penetrating said bar (1),
means (13, 14, 17) for detachably holding said bar (1),
rotating means (15) for rotating said bar (1),
a water injection nozzle (20) communicating with a cooling water feed source,
said water injection nozzle (20) being inserted into said hollow (2) of the bar (1) for injecting cooling water from an injection port (2') located at a tip (1'') of the bar (1), and
a packing (30) for sealing a gap between an outer periphery (20') of said nozzle (20) and an inner periphery of said bar (1) at a proximal end (1') of the bar (1), **characterized in that** said means (13, 14, 17) for detachably holding said bar (1) comprises a pushbutton (17) having an opening (17') for inserting the water injection nozzle (20) therethrough.

2. The center injection type dental handpiece of claim 1, wherein said packing (30) has a hole (31) for inserting said water injection nozzle (20) therethrough.

3. The center injection type dental handpiece of claim 1, wherein said means (13, 14, 17) for detachably holding said bar (1) further comprises a chuck device (14) for detachably holding said bar (1) in place, and wherein said pushbutton (17) releases said bar (1) from the chuck device (14),

4. The center injection type dental handpiece of claim 1, wherein said packing (30) has a groove (32) mating with an edge of said opening (17') of the pushbutton (17), and the packing (30) is fit in the opening (17') of the pushbutton (17).

## Patentansprüche

1. Zahnärztliches Handstück mit zentraler Injektion, umfassend:
eine Schneidwerkzeugwelle (1) mit einem Hohlraum (2), welcher die Welle (1) axial durchdringt,
eine Einrichtung (13, 14, 17) zur lösbaren Halterung der Welle (1),
eine Antriebseinrichtung (15) zum rotierenden Antrieb der Welle (1),
eine Wasserinjektionstülle (20), die mit einer Kühlwasserversorgung verbunden ist, wobei die Wasserinjektionstülle (20) in den Hohlraum (2) der Welle (1) eingefügt ist, um Kühlwasser aus einer Wasserinjektionsöffnung (2') zu injizieren, die am vorderen Ende (1") der Welle (1) angeordnet ist, und
ein Dichtungselement (30) zur Abdichtung eines Zwischenraumes zwischen einem äußeren Umfang (20') der Tülle (20) und einem inneren Umfang der Welle (1) am proximalen Ende (1') der Welle (1),
**dadurch gekennzeichnet, dass** die Einrichtung (13, 14, 17) zur lösbaren Halterung der Welle (1) einen Druckknopf (17) aufweist, welcher eine Öffnung (17') zum Einfügen der Wasserinjektionstülle (20) durch diese hindurch besitzt.

2. Zahnärztliches Handstück mit zentraler Injektion nach Anspruch 1, bei welchem das Dichtungselement (30) eine Bohrung (31) zum Einfügen der Wasserinjektionstülle (20) durch diese hindurch besitzt.

3. Zahnärztliches Handstück mit zentraler Injektion nach Anspruch 1, bei welchem die Einrichtung (13, 14, 17) zur lösbaren Halterung der Welle (1) weiterhin eine Klemmeinrichtung (14) zur lösbaren Fixierung der Welle (1) in ihrer Lage umfasst, und bei welchem der Druckknopf (17) die Welle (1) aus der Klemmeinrichtung (14) freigibt.

4. Zahnärztliches Handstück mit zentraler Injektion nach Anspruch 1, bei welchem das Dichtungselement (30) eine Nut (32) aufweist, die mit einer Kante der Öffnung (17') des Druckknopfes (17) in Eingriff steht, und das Dichtungselement (30) in die Öffnung (17') des Druckknopfes (17) eingefügt ist.

## Revendications

1. Pièce à main dentaire du type à injection centrale, comprenant :
une barre (1) de coupe ayant un creux (2) qui pénètre axialement dans la barre (1),
un dispositif (13, 14, 17) de maintien temporaire de la barre (1),
un dispositif (15) d'entraînement en rotation de la barre (1),
une buse (20) d'injection d'eau qui communique avec une réserve d'alimentation en eau de refroidissement, la buse (20) d'injection d'eau étant insérée dans le creux (2) de la barre (1) pour l'injection d'eau de refroidissement provenant d'un orifice d'injection (2') disposé à un bout (1") de la barre (1), et
une garniture (30) destinée à fermer de manière étanche un espace compris entre la périphérie externe (20') de la buse (20) et la périphérie interne de la barre (1) à une extrémité proximale (1') de la barre (1),
**caractérisée en ce que** le dispositif (13, 14, 17) de maintien temporaire de la barre (1) comporte un bouton-poussoir (17) ayant une ouverture (17') d'insertion de la buse (20) d'injection d'eau.

2. Pièce à main dentaire du type à injection centrale selon la revendication 1, dans laquelle la garniture (30) a un trou (31) d'insertion de la buse (20) d'injection d'eau.

3. Pièce à main dentaire du type à injection centrale selon la revendication 1, dans laquelle le dispositif (13, 14, 17) de maintien temporaire de la barre (1) comporte en outre un dispositif à mandrin (14) destiné à maintenir de façon temporaire la barre (1) en place, et dans laquelle le bouton-poussoir (17) libère la barre (1) du dispositif à mandrin (14).

4. Pièce à main dentaire du type à injection centrale selon la revendication 1, dans laquelle la garniture (30) a une gorge (32) coopérant avec un bord de l'ouverture (17') du bouton-poussoir (17), et la garniture (30) est ajustée dans l'ouverture (17') du bouton-poussoir (17).
